# EUROPÄISCHE PATENTSCHRIFT

(11) **EP 2 864 073 B1**
(45) Veröffentlichungstag und Bekanntmachung des Hinweises auf die Patenterteilung: **03.08.2022**
(21) Anmeldenummer: 13729315.5
(22) Anmeldetag: 11.06.2013
(51) Int. Cl.: B23D 33/02, B23D 23/00, B23D 29/00, B23D 35/00

(54) **SCHNEIDGERÄT**
CUTTING DEVICE
APPAREIL DE COUPE

(30) Priorität: 21.06.2012 DE 102012105383
(43) Veröffentlichungstag der Anmeldung: 29.04.2015
(73) Patentinhaber: Gustav Klauke GmbH, 42855 Remscheid (DE)
(72) Erfinder: FRENKEN, Egbert, 52525 Heinsberg (DE)
(74) Vertreter: Müller, Enno
(86) Internationale Anmeldenummer: PCT/EP2013/061965
(87) Internationale Veröffentlichungsnummer: WO 2013/189774

(56) Entgegenhaltungen:
- DE-A1- 19 926 481
- US-A- 5 457 889

## Beschreibung

Die Erfindung betrifft ein Schneidgerät gemäß dem Oberbegriff des Anspruchs 1 mit einem Halterungskopf und in dem Halterungskopf angeordneten, gegeneinander entlang einer Schneidebene verfahrbaren Schneidwerkzeugen, wobei die Schneidwerkzeuge, von denen eines feststehend und das andere beweglich ist, in dem Halterungskopf herausnehmbar, quer zu der Schneidebene versetzt und aneinander vorbei bewegbar angeordnet sind, und an in Verfahrrichtung gegenüberliegenden und einander zugewandten Kanten ihrer Stirnflächen, die zudem sich zu einer Kontur eines zu schneidenden Werkstückes ergänzen und eine Anlagefläche ausbildende Ausnehmungen aufweisen, Schneidkanten ausbilden, wobei weiter ein Schneidwerkzeug seitlich versetzt zu der Schneidebene ein Stützteil aufweist, das eine Stützfläche ausbildet, die gegensinnig zu der Ausnehmung öffnend ausgebildet ist.

Derartige Schneidgeräte sind bereits in verschiedener Hinsicht bekannt geworden. Es wird beispielsweise auf die DE 19926481 A1 beziehungsweise die US 6230542 B1 verwiesen. Weiter wird auf die US 5457889 A verwiesen. Zur Ausbildung eines derartigen Gerätes unabhängig von dem Arbeitskopf wird auch auf die WO 03/084719 A2 beziehungsweise die US 7254982 B2 verwiesen. Schneidgeräte gemäß dem Oberbegriff des Anspruchs 1 sind durch die DE 19926481 A1 offenbart.

Bei den bekannten Schneidgeräten ist das Stützteil entweder an dem verfahrbaren Werkzeug ausgebildet oder fest verbunden mit dem Halterungskopf vorgesehen. Zudem sind bei dem bekannten Schneidgerät die Stützflächen und die Anlageflächen in Schneidrichtung bei kreisförmigen Schneidkanten durchgehend kreisabschnittförmig gebildet. Lediglich in Querrichtung zur Schneidebene können noch Gewindeausformungen vorgesehen sein.

Darüber hinaus ist es aus den beiden erstgenannten Druckschriften bekannt, im Hinblick auf zu schneidende Profilteile in den Schneidwerkzeugen jeweils geschlossene Schneidausnehmungen auszubilden.

Es besteht die Aufgabenstellung, Profilteile mit einem derartigen Schneidgerät günstig zu schneiden.

Diese Aufgabe ist bei einem Schneidgerät mit den Merkmalen des Anspruchs 1 gelöst, bei welchem beide Anlageflächen mit aufeinander zu gerichteten Eingriffsvorsprüngen ausgebildet sind, die bezogen auf eine im Übrigen in Schneidrichtung gegebene, im Wesentlichen Halbkreis-Kontur der Anlageflächen einen Fuß-Umfangswinkelbereich von 20 bis 90 Grad einnehmen, in das Halbkreis-Innere um ein Fünftel bis 9/10 des Radiusmaßes der Halbkreis-Kontur (wobei der Radius auf einen diesbezüglichen Vollkreis bezogen ist) vorragen und an ihrem fußseitigen Übergang in die Halbkreis-Kontur in einer Umfangsrichtung in einen ersten und einen zweiten Kreisbogenabschnitt übergehen.

Auch bezogen auf einen derartigen teilweise nicht einer Kreiskontur folgenden Umfang eines zu schneidenden Werkstücks ist ein Arbeitskopf angegeben, dessen Schneidwerkzeuge jeweils eine offene, im Wesentlichen Halbkontur des zu schneiden Werkstücks aufweisen. Dadurch, dass die Eingriffsvorsprünge vorgesehen sind, kann zum einen an einem der Schneidwerkzeuge vor Beginn des tatsächlichen Schneidens das zu schneidende Werkstück winkelgerecht festgelegt werden und zum anderen folgt die Schneidkontur insofern einer Querschnittskontur des zu schneidenden Werkstücks, wodurch sich eine günstige Schneidfläche ergibt.

Es ist bevorzugt, dass die Kreisbogenabschnitte unterschiedlich lang sind. Der Vorsprung kann also - bezogen auf eine im Wesentlichen Halbkreis-Kontur einer Anlagefläche - gleichsam außermittig vorgesehen sein. Bevorzugt ist auch, dass ein Flankenabschnitt des Eingriffsvorsprungs in einer Projektion in Verfahrrichtung des beweglichen Schneidwerkzeugs ohne Hinterschnitt in den ersten beziehungsweise zweiten Kreisbogenabschnitt übergehen.

Weiterhin ist auch bevorzugt, dass die Stützfläche zusammen mit der Anlagefläche des feststehenden Schneidwerkzeuges eine Ausrichtung eines zugleich in der Anlagefläche und der Stützfläche aufgenommenen stabförmigen, geraden, eine Längsachse aufweisenden Werkstückes, das in seiner Außenkontur einer Innenkontur der Anlagefläche beziehungsweise der Stützfläche entspricht, erbringt, bei welcher die Längsachse mit einer senkrecht zu der Schneidebene verlaufenden Bezugsebene einen spitzen Winkel einschließt. Dieser Winkel ist bevorzugt derart gewählt, dass das Werkstück zu dem anderen, bevorzugt dem feststehenden, Schneidwerkzeug hin geneigt ist. Auf diese Weise ist es vorteilhaft möglich, beim Schneidvorgang aufgrund der Elastizität des Werkstückes des Werkstücks gegebenenfalls einstellende Ungleichförmigkeiten, insbesondere Ungleichförmigkeiten, die zu einer - bezogen auf eine Längsachse - des Werkstücks nicht senkrecht verlaufende Schnittfläche am Werkstück führen, korrigierend einzuwirken, derart, dass die Schnittfläche nahezu exakt rechtwinklig zu der Längsachse verläuft.

Die vor- und nachstehend angegebenen Bereiche, insbesondere Winkelbereiche oder Abstandsbereiche, aber auch dimensionslose Bereiche, schließen hinsichtlich der Offenbarung auch sämtliche Zwischenwerte ein, insbesondere in 1/10 Grad-Schritten, einerseits zur Eingrenzung der genannten Bereichsgrenzen von unten und/oder oben, alternativ oder ergänzend aber auch im Hinblick auf die Offenbarung eines oder mehrerer singulärer Werte aus einem jeweilig angegebenen Bereich.

Nachstehend ist die Erfindung des Weiteren in Bezug auf beigefügte Zeichnung erläutert, wobei zeigt:

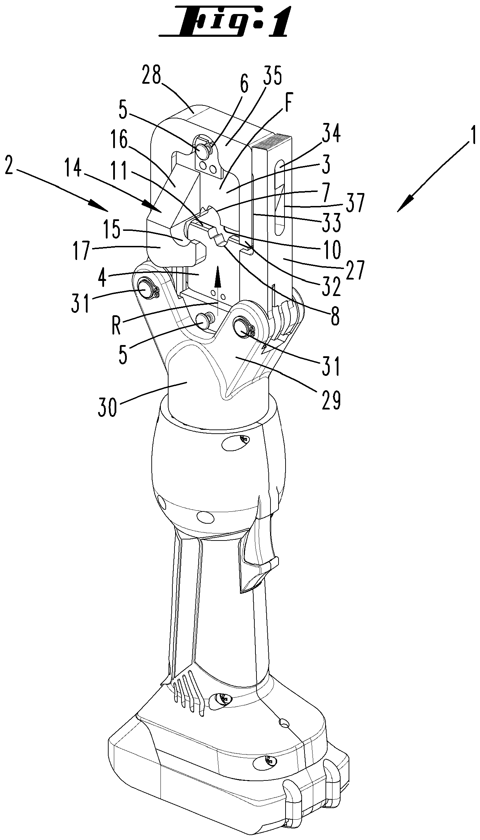

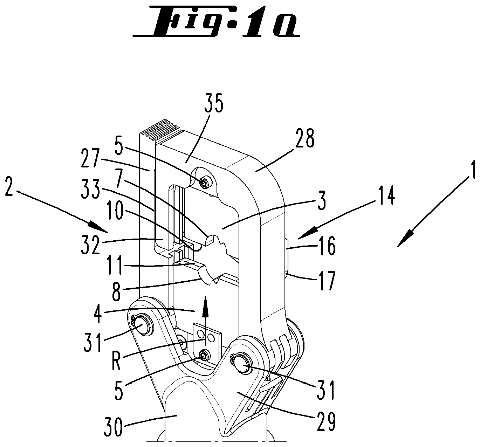

- Fig. 1: eine perspektivische Ansicht eines Schneidgerätes;
- Fig. 1a: eine Rückansicht gemäß Fig. 1;
- Fig. 2: den Arbeitskopf des Schneidgerätes gemäß Figur 1, geöffnet;

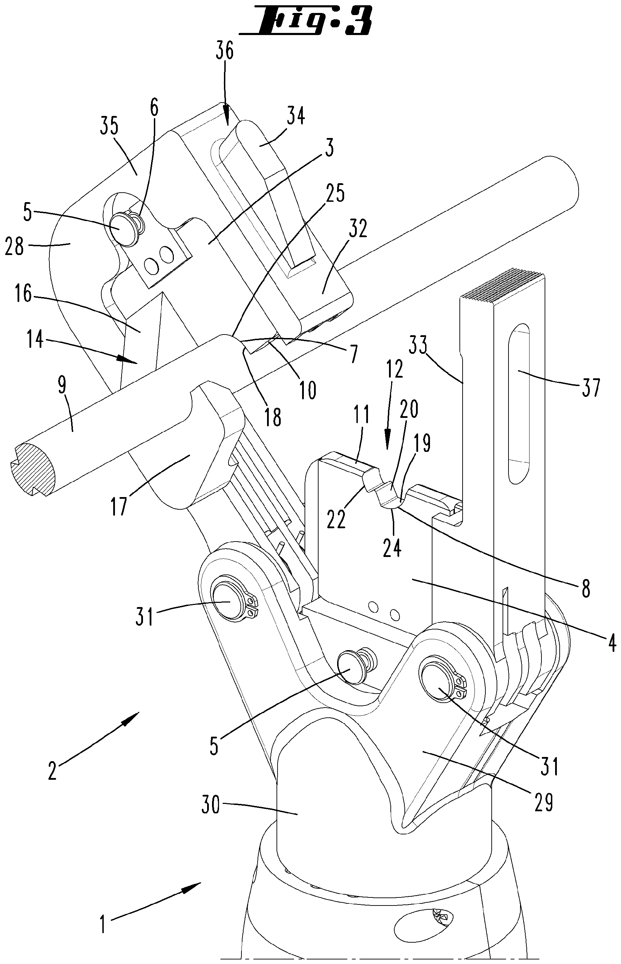

- Fig. 3: eine Darstellung gemäß Figur 2, mit in das feststehende Schneidwerkzeug eingelegtem Werkstück;
- Fig. 4: der Arbeitskopf gemäß Figur 2 beziehungsweise Figur 3 in geschlossener Stellung;
- Fig. 5: einen Querschnitt durch den Gegenstand gemäß Figur 4, geschnitten in der Ebene V-V;

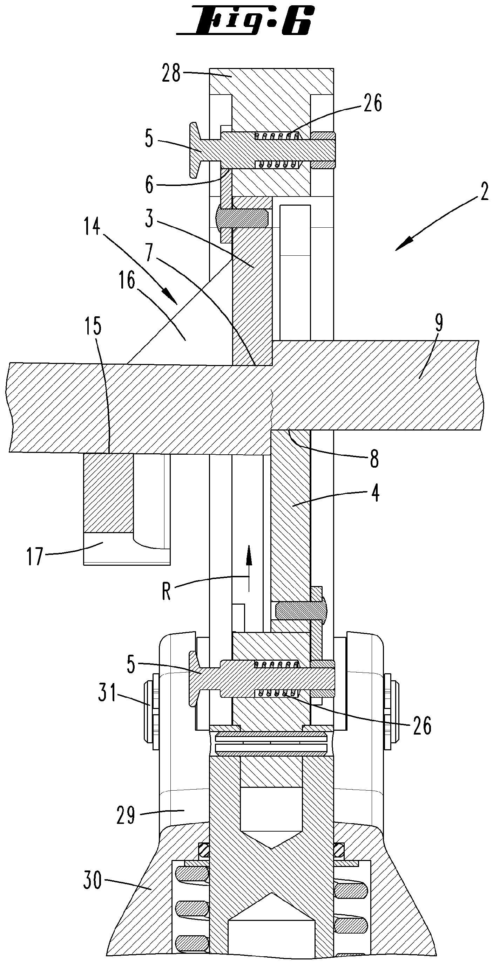

- Fig. 6: eine Darstellung gemäß Figur 5, im Zuge eines Schneidvorganges;
- Fig. 7: eine perspektivische Ansicht des feststehenden Schneidwerkzeuges in Einzeldarstellung, von schräg vorne;
- Fig. 8: eine Darstellung gemäß Figur 7, von schräg hinten;
- Fig. 9: eine Darstellung gemäß Figur 7 des beweglichen Schneidwerkzeuges; und
- Fig. 10: eine Darstellung gemäß Figur 8 des beweglichen Schneidwerkzeugs.

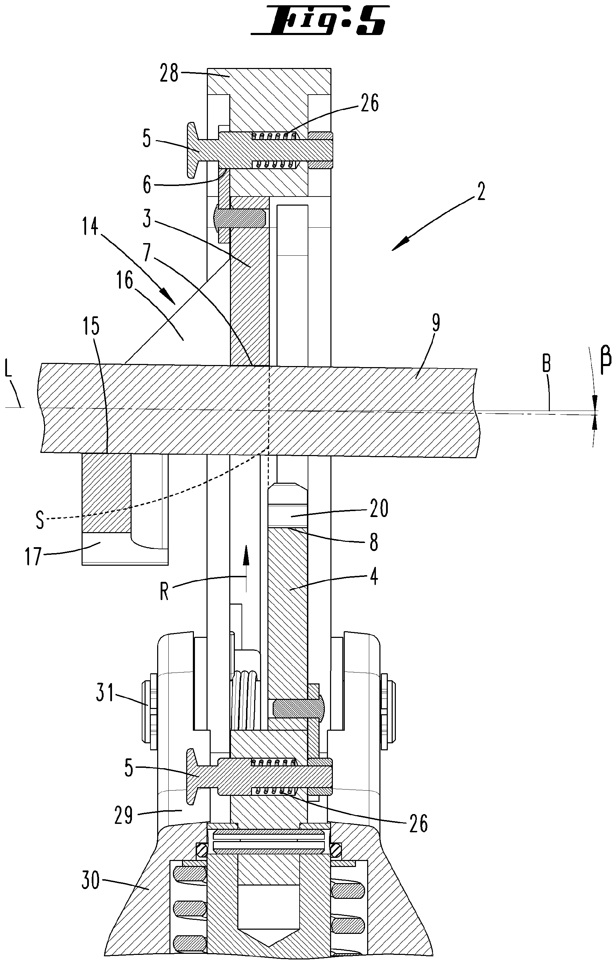

Dargestellt und beschrieben ist ein Schneidgerät 1 mit einem Halterungskopf 2. In dem Halterungskopf 2 sind zwei gegeneinander entlang einer Schneidebene S, vergleiche Figur 5, verfahrbar Schneidwerkzeuge 3, 4 angeordnet. Das Schneidwerkzeug 3 ist feststehend und das Schneidwerkzeug 4 beweglich angeordnet. Das Schneidwerkzeug 4 ist in weiterer Einzelheit mit einem, beim Ausführungsbeispiel, Hydraulikkolben verbunden, der durch Aufbau von entsprechendem Hydraulikdruck in einer Verfahrrichtung R bewegt wird.

Die beiden Schneidwerkzeuge 3, 4 sind in dem Halterungskopf 2 herausnehmbar angeordnet.

Im Einzelnen sind die Schneidwerkzeuge 3, 4 mittels eines Halterungszapfens 5 gehaltert, der in eine Hintergrifföffnung 6 eines Schneidwerkzeuges 3, 4 eingreift. Durch Niederdrücken des Halterungszapfens 5 gegen eine Feder 26 kommt der dünnere Zapfenabschnitt in Überdeckung zu der Öffnung dieses Halterungsabschnittes des Schneidwerkzeuges 3, 4, so dass es entnommen werden kann.

In Bezug auf die Schneidebene S sind die Schneidwerkzeuge 3, 4, vergleiche Figur 5, in welcher sich die Schneidebene S als Linie abbildet, seitlich versetzt zueinander angeordnet. Sie sind derart aneinander vorbei bewegbar. Das bewegliche Schneidwerkzeug 4 wird so weit an dem feststehenden Schneidwerkzeug 3 vorbeibewegt, dass die Schneidkanten 7, 8 sich zur vollständigen Schneiddurchtrennung eines Werkstückes 9 ausreichend aneinander vorbei bewegen.

Die Schneidkanten 7, 8 sind an in Verfahrrichtung R gegenüberliegenden und einander zu gewandten Kanten der Stirnflächen 10, 11 der Schneidwerkzeuge 3, 4 ausgebildet. Die Stirnflächen 10, 11 bilden zudem eine sich gemeinsam zu einer Kontur, jedenfalls im Wesentlichen, des zu schneidenden Werkstücks 9 ergänzende Ausnehmungen 12, 13 aus.

Eines der Schneidwerkzeuge 3, 4, beim Ausführungsbeispiel und erfindungsgemäß das feststehende Schneidwerkzeug 3, bildet weiter seitlich versetzt zu der Schneidkante 7 dieses feststehenden Schneidwerkzeuges 3 ein Stützteil 14 aus. Das Stützteil 14 ist bevorzugt einstückig, materialeinheitlich, beispielsweise durch Erzeugung als Gussteil oder als Frästeil, mit dem feststehenden Schneidwerkzeug 3 gebildet.

Das Stützteil 14 bildet in weiterer Einzelheit eine Stützfläche 15 aus, die gegensinnig zu der zugeordneten Ausnehmung 13 des feststehenden Schneidwerkzeugs 3 öffnet.

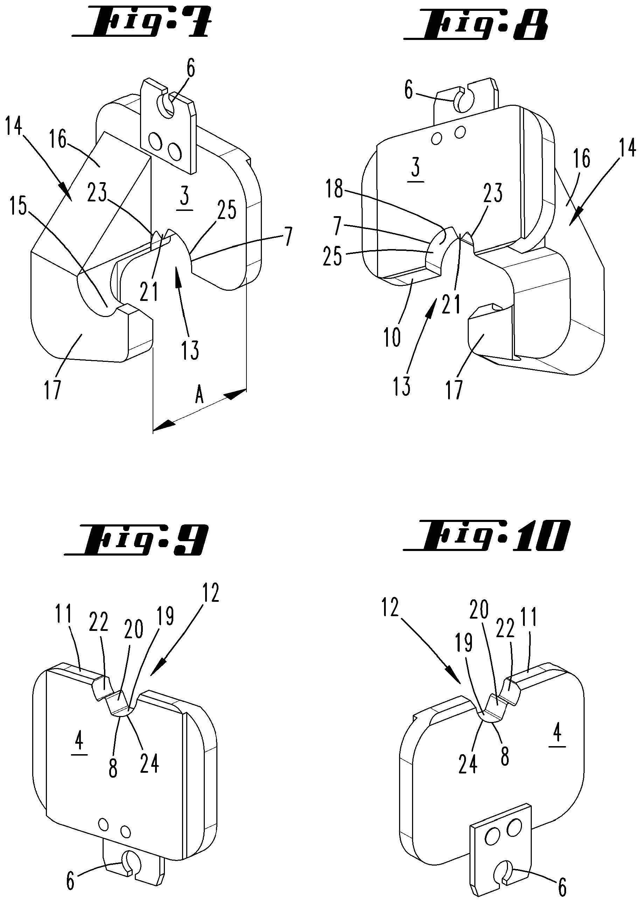

In weiterer Einzelheit ist das Stützteil als von einer Seitenfläche F, die im Wesentlichen parallel sich erstreckend zu der Schneidebene S verlaufend ausgebildet ist, senkrecht abgehender Stützarm 16 gebildet, der hakenförmig in einen Kragarm 17 übergeht. Der Kragarm 17 erstreckt sich in einer Ansicht in Schneidrichtung rechtwinklig zu dem Stützarm 16. Der Kragarm 17 verläuft weiter mit einem freien seitlichen Abstand zu der genannten Seitenfläche F des feststehenden Schneidwerkzeuges 3. Der freie Abstand A, wie er beispielsweise aus Figur 7 ersichtlich ist, ist größer als ein Durchmesser eines Kreises, den die Stützfläche 15 und die Anlagefläche 18, welche die Ausnehmung 13 bildet, in den kreisabschnittförmigen Bereichen prinzipiell begrenzen. Die Größe kann bis hin zum zwei- oder dreifachen eines solchen Kreises gehen.

Die Anlagefläche 18, welche durch die Ausnehmung 13 gebildet ist, wie auch die Anlagefläche 19, welche durch die Ausnehmung 12 gebildet ist, weisen jeweils einen Eingriffsvorsprung 20 beziehungsweise 21 auf, bei im Übrigen in wesentlicher Halbkreis-Kontur der Anlageflächen 18, 19.

Der Eingriffsvorsprung 20 beziehungsweise 21 weist fußseitig, beim Übergang in die genannte Halbkreis-Kontur im Übrigen, einen Umfangswinkelbereich a, bezogen auf einen Radius r eines kreisabschnittförmigen Bereiches der Anlagefläche 17 beziehungsweise 18 von 20 bis 90 Grad auf. Der Eingriffsvorsprung ist nach innen, bezogen auf den Halbkreis beziehungsweise den durch beide Anlageflächen, wenn sie entsprechend zusammengefahren sind und in Projektion gebildeten Vollkreis gerichtet. Das Maß m, um welches der Eingriffsvorsprung in das Innere vorragt, entspricht einem Fünftel bis zu 9/10 des Radius r der Halbkreis-Kontur. Das Maß m ist dabei von der radialen Spitze des Eingriffsvorsprungs gemessen bis zu der Kreislinie, wenn man sie von den flankierenden Kreisbogenabschnitten aus durchzieht. Seitlich, in Umfangsrichtung der jeweiligen Halbkreis-Kontur, schließt sich an den Eingriffsvorsprung 20 beziehungsweise 21 ein erster Kreisbogenabschnitt 22 beziehungsweise 23 und ein zweiter Kreisbogenabschnitt 24 beziehungsweise 25 an.

Die genannten Kreisbogenabschnitte 22 und 24 beziehungsweise 23 und 25 sind unterschiedlich lang. Bevorzugt ist der zweite Kreisbogenabschnitt ein Drittel oder mehr größer als der erste Kreisbogenabschnitt bis hin zum drei- oder vierfachen. Bezüglich der Schneidwerkzeuge 3, 4 sind die ersten Kreisbogenabschnitte und zweiten Kreisbogenabschnitte unmittelbar in Gegenüberlage ausgebildet.

Die Stützfläche 15 ist zusammen mit der Anlagefläche des feststehenden Schneidwerkzeuges 3 derart gerichtet, dass sich eine Ausrichtung eines zugleich in der Anlagefläche und der Stützfläche aufgenommenen Werkstücks 9, vergleiche Figur 5, bezogen auf die Längsachse L des Werkstücks und eine senkrecht zu der Schneidebene S verlaufende Bezugsebene B ein spitzer Winkel β von 0,2 bis 2 Grad ergibt. Der spitze Winkel β ist - ausgehend von der Bezugsebene B - zu dem beweglichen Schneidwerkzeug 4 hin gerichtet.

Das Werkstück 9 ist ersichtlich ein stabförmiges, gerades Werkstück. In seiner Außenkontur entspricht es einer Innenkontur der Anlagefläche beziehungsweise der Stützfläche.

Wie angemerkt, kann das bewegliche Schneidwerkzeug über einen Hydraulickolben betätigt sein. In weiterer Einzelheit kann die Ausgestaltung des Schneidwerkzeugs insoweit, hinsichtlich der Betätigung, gemäß der genannten WO 03/084719 A2 beziehungsweise der US 7254982 B2 vorgesehen sein, insbesondere die Ausgestaltung betreffend den Hydraulikantrieb, das Getriebe, die Betätigungstasten, den Elektromotor und den Akkumulator sowie deren Anordnung im Gerät, wie sie in den genannten Druckschriften beschrieben sind, werden hiermit vollinhaltlich in die Offenbarung vorliegender Anmeldung mit einbezogen, auch zu dem Zweck, Merkmale aus diesen genannten Druckschriften in Ansprüche vorliegender Anmeldung mit aufzunehmen.

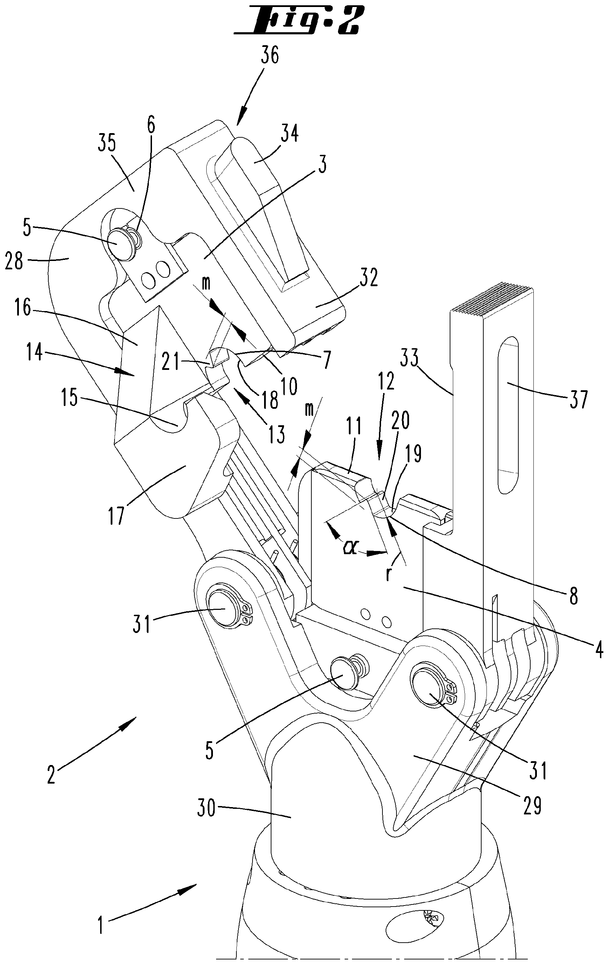

Hinsichtlich des Arbeitskopfes ist in weiterer Einzelheit der Halterungskopf 2 mit der schon angesprochenen Rechteckführung für die Schneidwerkzeuge ausgebildet. Hierbei ist weiter bevorzugt ein Längsseitenteil 27 vorgesehen, mit einer quer zur Erstreckungsrichtung der Rechteckführung, d.h. quer zur Bewegungsrichtung des beweglichen Schneidwerkzeuges gemessenen Breite, welche der des Winkelteiles 28, mit dem das Längsseitenteil in Verbindung die Rechteckführung bildet, entspricht. Das dritte Teil der Rechteckführung ist als zweites Schmalseitenteil 29 gebildet, wobei an dem dargestellten Ausführungsbeispiel konkret zwei Schmalseitenteile in einer Richtung quer zur Verfahrrichtung des beweglichen Schneidekörpers zueinander beabstandet vorgesehen sind. Diese sind über einen im Querschnitt bevorzugt kreisrunden Flansch 30 zur Anordnung des Halterungskopfes an einem Hals des Rumpfgerätes, wie dies in Fig. 2 angedeutet ist, miteinander verbunden.

In dem zwischen den Schmalseitenteilen 29 gebildeten Zwischenraum sind sowohl das Längsseitenteil 27 wie auch das Winkelteil 28 schwenkbar gelagert.

Hierzu sind sowohl die Schmalseitenteile 29 als auch ein Bereich des Längsseitenteiles 27 und das freie Ende des längeren U-Schenkels des Winkelteiles 28 jeweils von einem Bolzen 31 durchsetzt, welcher außenwandseitig der Schmalseitenteile 29 ersichtlich mit Sicherungsringen auszuggesichert sind.

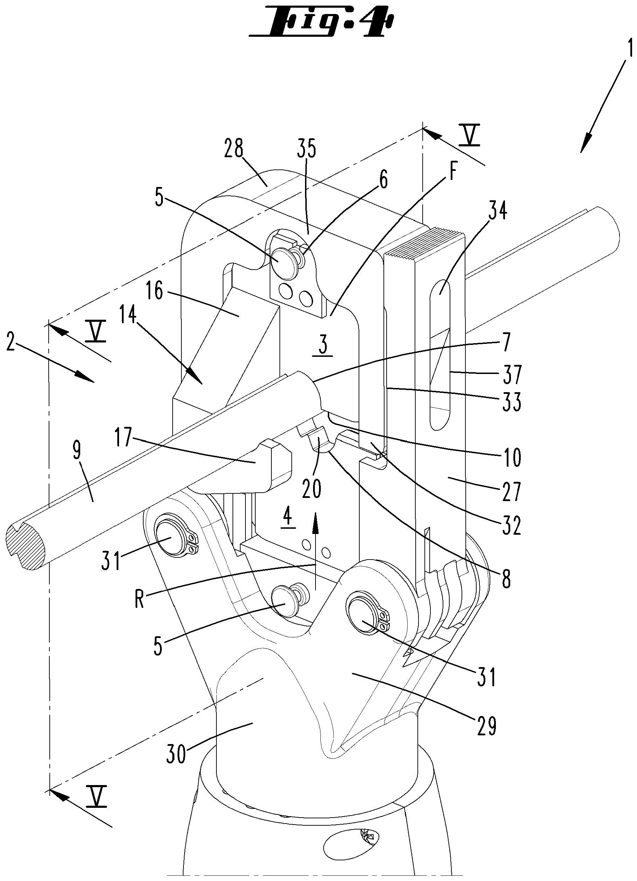

Das Längsseitenteil 27 der Rechteckführung ist in Überdeckung bringbar zum Längsseiten-Teilabschnitt 32 des Winkelteils 28, wozu letzteres eine Stärke (Dicke) aufweist, die etwa der halben Stärke des Längsseitenteils 27 in dessen Gelenkbereich entspricht. Das Längsseitenteil 27 weist zugeordnet dem Längsseiten-Teilabschnitt 32 eine stirnrandoffene Aussparung 33 auf, die längenmäßig etwas größer bemessen ist als die Länge des Längsseiten-Teilabschnitts 32. Der Längsseiten-Teilabschnitt 32 ist in der Aussparung 33 voll aufnehmbar zur Bildung eines durchgehend gleich starken und breiten Seitenteiles (siehe auch Fig. 4).

Zur Festlegung des Winkelteils 28 beziehungsweise seines Längsseiten-Teilabschnitts 32 an dem Längsseitenteil 27 ist der Längsseiten-Teilabschnitt 32 oberseitig mit einem langgestreckten Vorsprung 34 versehen, dessen vorderer, dem Schmalseiten-Teilabschnitt 35 des Winkelteils 28 zugewandter Stirnbereich 36, was im Einzelnen wegen der geringen Neigung des Stirnbereichs 36 in der Zeichnung nicht zu erkennen ist, hinterschnitten ist. Dieser Vorsprung 34 tritt in einen entsprechend ausgeformten und ausgerichteten Längsschlitz 37, der eine entsprechend hinterschnittene Stirnzone aufweist, im Verschlusszustand ein. In der Geschlossenstellung gemäß Fig. 4 ist somit das Winkelteil 28 über dessen Vorsprung 34 in dem Längsschlitz 37 des Längsseitenteils 27 formschlüssig gehalten, so dass eine Öffnung des Halterungskopfes lediglich willensbetont erfolgen kann.

Das hier beschriebene Schneidgerät ist insbesondere ausgestaltet, um sogenannte Fahrdrähte zu schneiden. Fahrdrähte sind stabförmige elektrische Leiterelemente, die bei Straßen- oder Eisenbahnen, insbesondere in der Oberleitung, zur Anwendung kommen.

**Bezugszeichenliste:**

| | | | |
|---|---|---|---|
| 1 | Schneidgerät | 25 | zweiter Kreisbogenabschnitt |
| 2 | Halterungskopf | 26 | Feder |
| 3 | Schneidwerkzeug | 27 | Längsseitenteil |
| 4 | Schneidwerkzeug | 28 | Winkelteil |
| 5 | Halterungszapfen | 29 | Schmalseitenteil |
| 6 | Hinterschnitt, Hintergriffsöffnung | 30 | Flansch |
| 7 | Schneidkante | 31 | Bolzen |
| 8 | Schneidkante | 32 | Längsseiten-Teilabschnitt |
| 9 | Werkstück | 33 | Aussparung |
| 10 | Stirnfläche | 34 | Vorsprung |
| 11 | Stirnfläche | 35 | Schmalseiten-Teilabschnitt |
| 12 | Ausnehmung | 36 | Stirnbereich |
| 13 | Ausnehmung | 37 | Lagerschlitz |
| 14 | Stützteil | | |
| 15 | Stützfläche | A | freier Abstand |
| 16 | Stützarm | B | Bezugsebene |
| 17 | Kragarm | F | Seitenfläche |
| 18 | Anlagefläche | R | Verfahrrichtung |
| 19 | Anlagefläche | S | Schneidebene |
| 20 | Eingriffsvorsprung | m | Maß |
| 21 | Eingriffsvorsprung | r | Radius |
| 22 | erster Kreisbogenabschnitt | | |
| 23 | erster Kreisbogenabschnitt | α | Umfangswinkel |
| 24 | zweiter Kreisbogenabschnitt | β | Winkel |

## Patentansprüche

1. Schneidgerät (1) mit einem Halterungskopf (2) und in dem Halterungskopf (2) angeordneten, gegeneinander entlang einer Schneidebene (S) verfahrbaren Schneidwerkzeugen (3, 4), wobei die Schneidwerkzeuge (3, 4), von denen eines feststehend und das andere beweglich ist, in dem Halterungskopf (2) herausnehmbar, quer zu der Schneidebene (S) versetzt und aneinander vorbei bewegbar angeordnet sind, und an in Verfahrrichtung (R) gegenüberliegenden und einander zugewandten Kanten ihrer Stirnflächen (10, 11), die zudem sich zu einer Kontur eines zu schneidenden Werkstückes (9) ergänzen und eine Anlagefläche (18, 19) ausbildende Ausnehmungen (12, 13) aufweisen, Schneidkanten (7, 8) ausbilden, wobei weiter ein Schneidwerkzeug (3, 4) seitlich versetzt zu der Schneidebene (S) ein Stützteil (14) aufweist, das eine Stützfläche (15) ausbildet, die gegensinnig zu der Ausnehmung (12, 13) öffnend ausgebildet ist, wobei das Stützteil (14) an dem feststehenden Schneidwerkzeug (3) ausgebildet ist, **dadurch gekennzeichnet, dass** beide Anlageflächen (18, 19) mit aufeinander zu gerichteten Eingriffsvorsprüngen (20, 21) ausgebildet sind, die bezogen auf eine im Übrigen in Schneidrichtung gegebene, im Wesentlichen Halbkreis-Kontur der Anlageflächen (18, 19) einen Fuß-Umfangswinkelbereich (α) von 20 bis 90 Grad einnehmen, in das Halbkreis-Innere um ein Fünftel bis zu 9/10 des Radius (r) der Halbkreis-Kontur vorragen und an ihrem fußseitigen Übergang in die Halbkreis-Kontur in einer Umfangsrichtung in einen ersten und einen zweiten Kreisbogenabschnitt (22, 23; 24, 25) übergehen.

2. Schneidgerät nach Anspruch 1, **dadurch gekennzeichnet, dass** die Kreisbogenabschnitte (22, 23; 24, 25) unterschiedlich lang sind.

3. Schneidgerät nach Anspruch 1oder 2, **dadurch gekennzeichnet, dass** die Stützfläche (15) zusammen mit der Anlagefläche (18, 19) des feststehenden Schneidwerkzeuges (3) eine Ausrichtung eines zugleich in der Anlagefläche (18, 19) und der Stützfläche (15) aufgenommenen stabförmigen, geraden, eine Längsachse aufweisenden Werkstückes (9), das in seiner Außenkontur einer Innenkontur der Anlagefläche (18, 19) beziehungsweise der Stützfläche (15) entspricht, erbringt, bei welcher die Längsachse mit einer senkrecht zu der Schneidebene (S) verlaufenden Bezugsebene (B) einen spitzen Winkel (β) einschließt.

## Claims

1. Cutting device (1) having a mounting head (2) and cutting tools (3, 4) arranged in the mounting head (2) so as to be movable towards each other along a cutting plane (S), wherein the cutting tools (3, 4), one of which is fixed and the other is movable, are arranged in the mounting head (2) so as to be removable, are offset transversely to the cutting plane (S) and are movable past each other, and form cutting edges (7, 8) on the edges of the frontal faces (10, 11) thereof that are opposite one another in the direction of travel (R) and facing towards each other, and which also complement each other to form a contour of a workpiece (9) to be cut, and have recesses (12, 13) that form an abutment surface (18, 19), wherein further a cutting tool (3, 4) has a bracing element (14) that is laterally offset with respect to the cutting plane (S), which bracing element forms a bracing surface (15) that is constructed to open in the opposite direction to the recess (12, 13), wherein the bracing element (14) is conformed on the fixed position cutting tool (3), **characterised in that** both abutment surfaces (18, 19) are constructed with engaging protrusions (20, 21) directed towards each other, which projections encompass a foot circumferential angular range (α) from 20 to 90 degrees relative to an essentially semicircular contour of the abutment surfaces (18, 19) that is otherwise aligned in the cutting direction, and which project into the interior of the semicircle by one fifth to 9/10 of the radius (r) of the semicircular contour, and of which the foot areas that become semicircular in shape gradually evolve into a first and a second circle arc segment (22, 23; 24, 25) in a circumferential direction.

2. Cutting device according to claim 1, **characterised in that** the circle arc segments (22, 23; 24, 25) are of different lengths.

3. Cutting device according to claim 1 or 2, **characterised in that** the bracing surface (15) together with the abutment surface (18, 19) of the fixed cutting tool (3) yield an alignment of a straight, rod-like workpiece (9) having a lengthwise axis that is retained in the abutment surface (18, 19) and the bracing surface (15) at the same time, the outer contour and the inner contour of which workpiece match the abutment surface (18, 19) and the bracing surface (15), in which the lengthwise axis forms an acute angle (β) with a reference plane (B) that extends perpendicularly to the cutting plane (S).

## Revendications

1. Appareil de coupe (1) avec une tête de maintien (2) et des outils de coupe (3, 4) agencés dans la tête de maintien (2) et déplaçables l'un par rapport à l'autre le long d'un plan de coupe (S), dans lequel les outils de coupe (3, 4), dont l'un est fixe et l'autre mobile, sont agencés de manière amovible dans la tête de maintien (2), décalés transversalement par rapport au plan de coupe (S) et déplaçables l'un le long de l'autre, et forment des arêtes de coupe (7, 8) sur des bords opposés dans la direction de déplacement (R) et tournés l'un vers l'autre de leurs surfaces frontales (10, 11), qui en outre se complètent pour former un contour d'une pièce à découper (9) et présentent des évidements (12, 13) formant une surface d'appui (18, 19), dans lequel en outre un outil de coupe (3, 4) présente une partie de support (14) décalée latéralement par rapport au plan de coupe (S), qui forme une surface de support (15) qui s'ouvre en direction opposée à l'évidement (12, 13), la partie de support (14) étant formée sur l'outil de coupe fixe (3), **caractérisé en ce que** les deux surfaces d'appui (18, 19) sont formées avec des saillies d'engagement (20, 21) dirigées l'une vers l'autre, qui, par rapport à un contour sensiblement en demi-cercle des surfaces d'appui (18, 19) donné par ailleurs dans la direction de coupe, occupent à leur base une plage angulaire périphérique (α) de 20 à 90 degrés, font saillie à l'intérieur du demi-cercle d'un cinquième à 9/10 du rayon (r) du contour en demi-cercle et, à leur raccordement au demi-cercle du côté de leur base, se transforment dans une direction circonférentielle en une première et une deuxième parties en arc de cercle (22, 23; 24, 25).

2. Appareil de coupe selon la revendication 1, **caractérisé en ce que** les parties en arc de cercle (22, 23; 24, 25) sont de longueurs différentes.

3. Appareil de coupe selon la revendication 1 ou 2, **caractérisé en ce que** la surface de support (15) conjointement avec la surface d'appui (18, 19) de l'outil de coupe fixe (3), procure une orientation d'une pièce d'œuvre droite en forme de barre ayant un axe longitudinal, qui est reçue à la fois dans la surface d'appui (18, 19) et la surface de support (15) et dont le contour extérieur correspond à un contour intérieur de la surface d'appui (18, 19) respectivement de la surface de support (15), dans laquelle orientation l'axe longitudinal forme un angle aigu (β) avec un plan de référence (B) s'étendant perpendiculairement au plan de coupe (S).
